# FASCICULE DE BREVET EUROPEEN

(11) **EP 1 973 780 B1**
(45) Date de publication et mention de la délivrance du brevet: **13.05.2009**
(21) Numéro de dépôt: 07717868.9
(22) Date de dépôt: 15.01.2007
(51) Int. Cl.: B64D 15/04, B64C 21/10

(54) **PROCÉDÉ DE DÉGIVRAGE DU BORD D'ATTAQUE D'UNE SURFACE AÉRODYNAMIQUE ET AÉRONEF METTANT EN UVRE UN TEL PROCÉDÉ**
VERFAHREN ZUR ENTEISUNG DER EINTRITTSKANTE EINER AERODYNAMISCHEN FLÄCHE UND FLUGZEUG MIT DERARTIGEM VERFAHREN
METHOD OF DE-ICING THE LEADING EDGE OF AN AERODYNAMIC SURFACE AND AIRCRAFT IMPLEMENTING SUCH A METHOD

(30) Priorité: 16.01.2006 FR 0600350
(43) Date de publication de la demande: 01.10.2008
(73) Titulaire: AIRBUS France, 31060 Toulouse (FR)
(72) Inventeur: BARBARA, Olivier, F-81700 Puylaurens (FR); DONJAT, David, F-31450 Ayguevives (FR)
(74) Mandataire: Bonnetat, Christian
(86) Numéro de dépôt international: PCT/FR2007/000065
(87) Numéro de publication internationale: WO 2007/080333

(56) Documents cités:
- FR-A- 1 026 745
- US-B1- 6 267 328
- US-B1- 6 354 538

## Description

La présente invention concerne le dégivrage du bord d'attaque de surfaces aérodynamiques d'aéronefs, telles que ailes, empennages ou nacelles de moteurs.

On sait que, en cas de besoin (prévention contre la formation de givre ou élimination de givre déjà formé), le bord d'attaque de telles surfaces aérodynamiques est dégivré par réchauffement par de l'air chaud sous pression, prélevé sur au moins l'un des moteurs de l'aéronef et amené à l'intérieur dudit bord d'attaque par un circuit de circulation d'air chaud sous pression.

A cet effet, une telle surface aérodynamique comporte, de façon connue, un bord d'attaque creux fermé, à l'arrière, par une cloison interne (ou cadre) reliant les faces d'intrados et d'extrados dudit bord d'attaque, au moins un orifice étant prévu pour mettre ledit bord d'attaque en communication avec l'extérieur, et on prévoit au moins une conduite d'alimentation en air chaud, apte à être raccordée, d'un côté, audit circuit de circulation d'air chaud sous pression et, de l'autre côté, à au moins un injecteur injectant un flux dudit air chaud sous pression dans ledit bord d'attaque.

Ainsi, ledit flux d'air chaud circule dans ledit bord d'attaque en le réchauffant avant de s'échapper à l'extérieur à travers ledit orifice de communication.

En pratique, dans un tel système connu de dégivrage, on est confronté à la difficulté résidant en ce que le débit et la température de l'air chaud prélevé sur ledit moteur varient de façon importante en fonction du régime de ce dernier : par exemple, lorsque l'aéronef est en attente au sol et que le moteur est à bas régime, le débit et la température dudit air chaud prélevé sont également à un niveau bas, alors que, lorsque l'aéronef est en montée, le régime du moteur est élevé et le débit et la température dudit air chaud prélevé présentent aussi des valeurs élevées.

Or, un tel système de dégivrage connu doit être efficace aussi bien dans l'un que dans l'autre des cas extrêmes mentionnés ci-dessus. Il en résulte que, ledit système de dégivrage étant par construction prévu pour être efficace à bas régime, ledit bord d'attaque risque d'être endommagé, sinon détruit, pour des régimes élevés dudit moteur.

Pour résoudre ce problème, on pourrait bien entendu utiliser des matériaux réfractaires pour la réalisation au moins partielle du bord d'attaque, ou bien encore prévoir des renforcements structuraux de ce dernier. Cependant, il s'agirait là de solutions coûteuses, augmentant de plus la masse dudit bord d'attaque.

Le document US-B1-6 354 538 ainsi que le document US-B1-6 267 328 montre un procédé selon le préambule de la revendication 1 et un aéronef selon le préambule de la revendication 7.

La présente invention a pour objet de remédier aux inconvénients mentionnés ci-dessus de manière simple et efficace.

A cette fin, selon l'invention, le procédé pour la protection du bord d'attaque creux d'une surface aérodynamique d'aéronef contre les effets dommageables de températures excessivement élevées de l'air chaud de dégivrage circulant à l'intérieur dudit bord d'attaque, ledit bord d'attaque étant fermé, à l'arrière, par une cloison reliant les faces d'extrados et d'intrados de celui-ci et ledit air chaud de dégivrage étant prélevé sur au moins un moteur dudit aéronef, est remarquable en ce que, sur au moins l'une desdites faces du bord d'attaque, en avant de ladite cloison, on exerce une action sur l'écoulement fluide pour faire passer celui-ci de l'état laminaire à l'état turbulent.

La présente invention résulte des deux constatations suivantes effectuées par la demanderesse :
- lorsque des points chauds apparaissent dans un tel bord d'attaque, ils se trouvent au voisinage de la jonction entre ladite cloison interne et les faces dudit bord d'attaque ; et
- au voisinage d'une telle jonction, l'écoulement fluide sur lesdites faces du bord d'attaque est laminaire.

Ainsi, en agissant sur ledit écoulement fluide en avant de ladite cloison (c'est-à-dire en amont si on considère cet écoulement fluide) pour faire passer celui-ci de l'état laminaire à l'état turbulent, on augmente fortement le coefficient d'échange thermique entre ledit bord d'attaque et ledit écoulement fluide, avant et au niveau desdits points chauds, ce qui permet de refroidir et de protéger ledit bord d'attaque aux emplacements sensibles aux températures excessivement élevées.

On remarquera que, en phase de décollage de l'aéronef, l'écoulement fluide sur ledit bord d'attaque étant d'autant plus important que la vitesse de l'aéronef est plus élevée, l'efficacité du refroidissement dudit bord d'attaque augmente avec cette vitesse, et donc avec le régime dudit moteur. En revanche, lorsqu'il n'existe aucun écoulement fluide sur le bord d'attaque (arrêt de l'aéronef au sol) ou lorsque cet écoulement fluide est faible, la mise en oeuvre de l'invention est neutre et le dégivrage reste optimal pour ces conditions.

Lorsque ladite surface aérodynamique est une aile ou un empennage, il est généralement avantageux de mettre en oeuvre l'invention aussi bien sur la face d'extrados que sur la face d'intrados dudit bord d'attaque.

En revanche, lorsque ladite surface aérodynamique est une nacelle de moteur, il est généralement suffisant de ne mettre en oeuvre l'invention que sur la face d'extrados du bord d'attaque, la face d'intrados présentant des contraintes thermiques plus faibles.

Dans une forme particulièrement simple et avantageuse de mise en oeuvre de l'invention, on rend rugueuse au moins en partie la (ou les) face(s) du bord d'attaque. Cette action pourrait être réalisée par grenaillage (ou par toute autre méthode analogue) de ladite (ou desdites) face(s).

Cependant, il est préférable de réaliser cette action en rapportant une bande rugueuse, par exemple du type abrasif, sur ladite (ou lesdites) face(s) du bord d'attaque, au moins sensiblement parallèlement à ladite cloison. Une telle bande rugueuse peut être installée facilement par rivetage, soudage, collage, etc ... De plus, l'utilisation d'une telle bande présente l'avantage que sa position sur le bord d'attaque peut être finement ajustée. En outre, une telle bande n'a aucun impact sur le processus de fabrication du bord d'attaque et n'impose ni matériau de nature particulière, ni renforcement structural, pour la réalisation de ce dernier.

La présente invention concerne, de plus, un aéronef comportant :
- au moins un moteur ;
- au moins une surface aérodynamique pourvue d'un bord d'attaque sensible au givrage, ledit bord d'attaque étant creux et fermé à l'arrière par une cloison reliant les faces d'extrados et d'intrados de celui-ci ; et
- au moins une conduite d'alimentation en air chaud sous pression raccordée, d'un côté, audit moteur et, de l'autre côté, à au moins un injecteur injectant un flux dudit air chaud sous pression dans ledit bord d'attaque, de sorte que ledit flux d'air chaud circule dans ledit bord d'attaque en le réchauffant,
ledit aéronef étant remarquable en ce qu'au moins l'une desdites faces dudit bord d'attaque est rugueuse en avant de ladite cloison, afin de rendre turbulent l'écoulement fluide sur ladite face.

De préférence, la rugosité de ladite face provient du fait que cette dernière porte une bande rugueuse rapportée au moins sensiblement parallèlement à ladite cloison.

Les figures du dessin annexé feront bien comprendre comment l'invention peut être réalisée. Sur ces figures, des références identiques désignent des éléments semblables.
La figure 1 est une vue schématique, en coupe selon la ligne I-I de la figure 2, d'un bord d'attaque perfectionné selon l'invention.
La figure 2 est une vue du dessus du bord d'attaque de la figure 1.

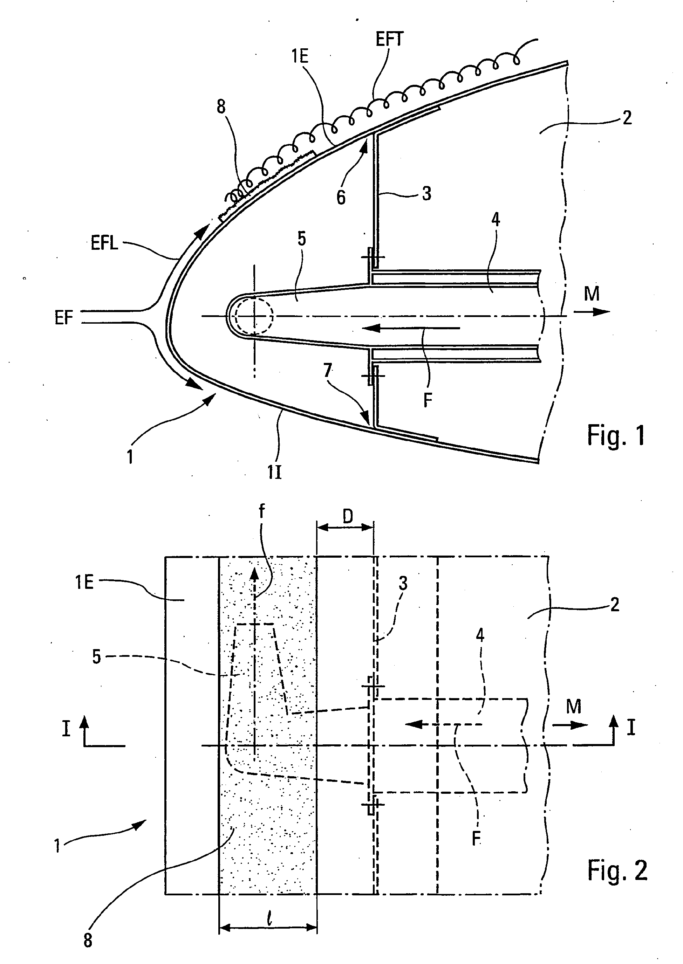

Dans l'exemple schématique des figures 1 et 2, on a représenté le bord d'attaque 1 d'une surface aérodynamique 2 d'un aéronef (non représenté). La surface aérodynamique 2 est, par exemple, la nacelle d'un moteur M (non représenté) dudit aéronef.

Le bord d'attaque 1 est creux et il est fermé à l'arrière par une cloison 3 reliant l'extrados 1E et l'intrados 1I dudit bord d'attaque.

A l'intérieur de la surface aérodynamique 2 est prévue une conduite 4 d'alimentation en air chaud sous pression raccordée d'un côté audit moteur M, sur lequel est prélevé ledit air chaud (voir la flèche F). De l'autre côté, ladite conduite 4 est raccordée, à travers la cloison 3, à un injecteur 5 injectant un flux d'air chaud sous pression à l'intérieur dudit bord d'attaque 1 (voir la flèche f). Ledit flux d'air chaud circule à l'intérieur dudit bord d'attaque 1, en le réchauffant pour éliminer l'éventuelle formation de givre sur ses faces d'extrados 1E et/ou d'intrados 1I, puis est rejeté à l'atmosphère par un ou des orifice(s) non représenté(s).

Si le régime du moteur M est élevé, le débit et la température des flux d'air chaud F et f sont importants et des points chauds 6 et/ou 7 risquent d'apparaître dans ledit bord d'attaque 1, à la jonction entre la cloison 3, d'une part, et l'extrados 1E et/ou l'intrados 1I du bord d'attaque 1, d'autre part.

Dans l'exemple représenté sur les figures 1 et 2, on a supposé que le point chaud 7, au niveau de l'intrados 1I, ne pouvait avoir aucune action dommageable sur le bord d'attaque 1, mais que, au contraire, le point chaud 6, au niveau de l'extrados 1E, était apte à endommager, et même détruire, ledit bord d'attaque 1.

Aussi, selon l'invention, sur ledit extrados 1E, en avant de la cloison 3, on a installé une bande 8 d'une matière rugueuse, parallèlement à ladite cloison. La fixation de la bande rugueuse 8 sur l'extrados 1E peut être réalisée par tout moyen connu, tel que collage, rivetage, soudage, etc ... La bande rugueuse 8 peut être du type des abrasifs industriels connus, par exemple à base de carbure de silicium.

Du fait de la présence de la bande 8 sur l'extrados 1E, l'écoulement fluide EF sur celui-ci passe de l'état laminaire EFL (avant la bande 8) à l'état turbulent EFT (à partir de la bande 8). De ce fait, au niveau du point chaud 6, sont créées des conditions de convection thermique favorables entre l'extrados 1E et l'environnement extérieur, permettant de protéger ledit extrados 1E contre les températures excessivement élevées.

On comprendra aisément que la largeur ℓ de la bande 8, la distance D de celle-ci à la cloison 3, ainsi que la granulométrie de ladite bande rugueuse, sont des paramètres permettant de régler finement l'action de ladite bande sur l'écoulement EF.

On comprendra, de plus, que si le point chaud 7 était dangereux pour l'intégrité du bord d'attaque 1, il serait possible d'installer sur l'intrados 1I une bande rugueuse semblable à la bande 8 rapportée à l'extrados 1E.

## Revendications

1. Procédé pour la protection du bord d'attaque creux (1) d'une surface aérodynamique (2) d'aéronef contre les effets dommageables de températures excessivement élevées de l'air chaud de dégivrage (f) circulant à l'intérieur dudit bord d'attaque (1), ledit bord d'attaque (1) étant fermé, à l'arrière, par une cloison (3) reliant les faces d'extrados (1E) et d'intrados (1I) de celui-ci et ledit air chaud de dégivrage (f) étant prélevé sur au moins un moteur (M) dudit aéronef,
**caractérisé en ce que,** sur au moins l'une desdites faces (1E, 1I) du bord d'attaque (1), en avant de ladite cloison (3), on exerce une action sur l'écoulement fluide (EF) pour faire passer celui-ci de l'état laminaire (EFL) à l'état turbulent (EFT).

2. Procédé selon la revendication 1, appliqué à une surface aérodynamique (2) de type aile ou empennage,
**caractérisé en ce que** ladite action est exercée aussi bien sur la face d'extrados (1E) que sur la face d'intrados (1I) dudit bord d'attaque (1).

3. Procédé selon la revendication 1, appliqué à une surface aérodynamique (2) de type nacelle de moteur,
**caractérisé en ce que** ladite action n'est exercée sur la face d'extrados (1E) dudit bord d'attaque.

4. Procédé selon l'une des revendications 1 à 3,
**caractérisé en ce que** ladite action consiste à rendre rugueuse au moins une partie de ladite face du bord d'attaque (1).

5. Procédé selon la revendication 4,
**caractérisé en ce que** ladite action consiste à rapporter une bande rugueuse (8) sur ladite face (1E, 1I) du bord d'attaque (1), au moins sensiblement parallèlement à ladite cloison (3).

6. Procédé selon la revendication 5,
**caractérisé en ce que** ladite bande rugueuse (8) est constituée par un abrasif.

7. Aéronef comportant :
- au moins un moteur (M) ;
- au moins une surface aérodynamique (2) pourvue d'un bord d'attaque (1) sensible au givrage, ledit bord d'attaque (1) étant creux et fermé à l'arrière par une cloison (3) reliant les faces d'extrados (1E) et d'intrados (1I) de celui-ci ; et
- au moins une conduite (4) d'alimentation en air chaud sous pression raccordée, d'un côté, audit moteur (M) et, de l'autre côté, à au moins un injecteur (5) injectant un flux (f) dudit air chaud sous pression dans ledit bord d'attaque (1), de sorte que ledit flux d'air chaud (f) circule
dans ledit bord d'attaque (1) en le réchauffant,
**caractérisé en ce qu'**au moins l'une desdites faces (1E, 1I) dudit bord d'attaque est rugueuse en avant de ladite cloison (3), afin de rendre turbulent l'écoulement fluide sur ladite face.

8. Aéronef selon la revendication 7,
**caractérisé en ce que** ladite face rugueuse porte une bande rugueuse (8) rapportée au moins sensiblement parallèlement à ladite cloison (3).

## Claims

1. A method for protecting the hollow leading edge (1) of an aircraft aerodynamic surface (2) against the damaging effects of excessively high temperatures of the hot deicing air (f) circulating inside said leading edge (1), said leading edge (1) being closed, at the rear, by a partition (3) connecting the top face (1E) and bottom face (1I) of said leading edge and said hot deicing air (f) being tapped off from at least one engine (M) of said aircraft,
**characterized in that,** on at least one of said faces (1E, 1I) of the leading edge (1), forward of said partition (3), an action is exerted on the fluid flow (EF) so as to cause the latter to switch from the laminar state (EFL) to the turbulent state (EFT).

2. The method as claimed in claim 1, applied to an aerodynamic surface (2) of wing or empennage type, **characterized in that** said action is exerted both on the top face (1E) and on the bottom face (1I) of said leading edge (1).

3. The method as claimed in claim 1, applied to an aerodynamic surface (2) of engine nacelle type, **characterized in that** said action is exerted on the top face (1E) of said leading edge.

4. The method as claimed in one of claims 1 to 3,
**characterized in that** said action consists in rendering at least one part of said face of the leading edge (1) rough.

5. The method as claimed in claim 4,
**characterized in that** said action consists in adding a rough band (8) to said face (1E, 1I) of the leading edge (1), at least substantially parallel to said partition (3).

6. The method as claimed in claim 5,
**characterized in that** said rough band (8) consists of an abrasive.

7. An aircraft comprising:
- at least one engine (M);
- at least one aerodynamic surface (2) provided with a leading edge (1) sensitive to icing, said leading edge (1) being hollow and closed at the rear by a partition (3) connecting the top face (1E) and bottom face (1I) of said leading edge; and
- at least one pressurized hot air feed pipe (4) joined, on one side, to said engine (M) and, on the other side, to at least one injector (5) injecting a stream (f) of said pressurized hot air into said leading edge (1), so that said hot air stream (f) circulates in said leading edge (1) while warming it,
**characterized in that** at least one of said faces (1E, 1I) of said leading edge is rough forward of said partition (3), so as to render the fluid flow on said face turbulent.

8. The aircraft as claimed in claim 7,
**characterized in that** said rough face carries a rough band (8) added at least substantially parallel to said partition (3).

## Patentansprüche

1. Verfahren zum Schutz der hohlen Eintrittskante (1) einer aerodynamischen Fläche (2) eines Flugzeugs vor den schädigenden Einwirkungen übermäßig hoher Temperaturen der im Inneren der Eintrittskante (1) zirkulierenden heißen Enteisungsluft, wobei die Eintrittskante (1) rückseitig durch eine die Saugseite (1E) und die Druckseite (1I) derselben verbindende Trennwand (3) verschlossen ist und die heiße Enteisungsluft (f) an mindestens einem Motor (M) des Flugzeugs entnommen wird,
**dadurch gekennzeichnet, dass** an mindestens einer der Seiten (1E, 1I) der Eintrittskante (1) vor der Trennwand (3) eine Einwirkung auf die Fluidströmung (EF) ausgeübt wird, um diese vom laminaren Zustand (EFL) in den turbulenten Zustand (EFT) zu versetzen.

2. Verfahren nach Anspruch 1, angewandt auf eine aerodynamische Fläche (2) nach Art eines Flügels oder Leitwerks,
**dadurch gekennzeichnet, dass** die Einwirkung sowohl an der Saugseite (1E) als auch an der Druckseite (1I) der Eintrittskante (1) ausgeübt wird.

3. Verfahren nach Anspruch 1, angewandt auf eine aerodynamische Fläche (2) nach Art einer Triebwerksgondel,
**dadurch gekennzeichnet, dass** die Einwirkung nur an der Saugseite (1E) der Eintrittskante ausgeübt wird.

4. Verfahren nach einem der Ansprüche 1 bis 3,
**dadurch gekennzeichnet, dass** die Einwirkung darin besteht, mindestens einen Teil der Seite der Eintrittskante (1) aufzurauen.

5. Verfahren nach Anspruch 4,
**dadurch gekennzeichnet, dass** die Einwirkung darin besteht, an der Seite (1E, 1I) der Eintrittskante (1) zumindest im Wesentlichen parallel zur Trennwand (3) ein raues Band (8) anzusetzen.

6. Verfahren nach Anspruch 5,
**dadurch gekennzeichnet, dass** das raue Band (8) aus einem Abrasivstoff besteht.

7. Flugzeug, umfassend:
- mindestens einen Motor (M),
- mindestens eine aerodynamische Fläche (2), die mit einer vereisungsempfindlichen Eintrittskante (1) ausgestattet ist, wobei die Eintrittskante (1) hohl und rückseitig durch eine die Saugseite (1E) und die Druckseite (1I) derselben verbindende Trennwand (3) verschlossen ist und
- mindestens eine Zufuhrleitung (4) für heiße Druckluft, die einerseits mit dem Motor (M) verbunden ist und andererseits mit mindestens einem Injektor (5), der einen Strom (f) der heißen Druckluft in die Eintrittskante (1) einspritzt, so dass der Heißluftstrom (f) in der Eintrittskante (1) zirkuliert und diese dabei erwärmt,
**dadurch gekennzeichnet, dass** mindestens eine der Seiten (1E, 1I) der Eintrittskante vor der Trennwand (3) rau ist, um die Fluidströmung an der Seite turbulent zu machen.

8. Flugzeug nach Anspruch 7,
**dadurch gekennzeichnet, dass** die raue Seite ein raues Band (8) trägt, das zumindest im Wesentlichen parallel zur Trennwand (3) angesetzt ist.
